# EUROPEAN PATENT APPLICATION

(11) **EP 4 835 594 A1**
(43) Date of publication of application: **04.11.2026**
(21) Application number: 24922106.0
(22) Date of filing: 22.10.2024
(51) Int. Cl.: G05B 19/418, G06Q 50/04

(54) **QUALITY FACTOR DETERMINATION DEVICE AND QUALITY FACTOR DETERMINATION METHOD**

(30) Priority: 29.01.2024 JP 2024011307
(71) Applicant: JFE Steel Corporation, Tokyo 100-0011 (JP)
(72) Inventor: KUYAMA, Shuji, Tokyo 100-0011 (JP); NAKAGAWA, Hiroshi, Tokyo 100-0011 (JP); TAKAGI, Hiroyuki, Tokyo 100-0011 (JP); MAITAKE, Koji, Tokyo 100-0011 (JP); HIRANO, Yuichiro, Tokyo 100-0011 (JP)
(74) Representative: Scott, Stephen John
(86) International application number: PCT/JP2024/037628
(87) International publication number: WO 2025/163996

(57) **Abstract**

A quality-factor determination apparatus 1 used in a batch production facility that has setup calculation and dynamic control functions. The quality-factor determination apparatus 1 includes a processor 30. The processor 30 obtains first classification information based on an in-batch operational fluctuation range calculated based on operational performance data and a first threshold calculated based on the operational performance data, and obtains second classification information based on an in-batch representative operating value calculated based on the operational performance data and a second threshold calculated based on the operational performance data. Upon obtaining a first determination result, the processor 30 causes the first threshold to be presented as an allowable value of the operational fluctuation range to be suppressed by the dynamic control, and upon obtaining a second determination result, the processor 30 causes the second threshold to be presented as an optimal setting value in the setup calculation.

## Description

### TECHNICAL FIELD

The present disclosure relates to a quality-factor determination apparatus and a quality-factor determination method used in a batch production facility.

### BACKGROUND

Conventionally, technologies are known that address quality defects of products produced in production facilities. For example, in Patent Literature (PTL) 1, a support system is described that supports an operator in estimating the cause of a quality abnormality when the operator carries out a task of estimating the cause of the quality abnormality. The support system described in PTL 1 focuses on correlation between operating variables included in past operational performance data and product quality, extracts operating variables that have a strong correlation with product quality, and displays a time-series chart of those operating variables to the operator.

### CITATION LIST

### Patent Literature

PTL 1: JP 6116445 B2

### SUMMARY

### (Technical Problem)

The support system described in PTL 1 only extracts operating variables that have a strong correlation with quality from product quality data and operating condition data on a product-ID basis, and displays a time-series chart of those operating variables to an operator, in order to identify the cause of a quality abnormality and prompt the operator to make an improvement. However, in actual quality improvement work, there are two possible methods: one is to improve quality by improving setup calculations that preset operating conditions on a per-steel-strip basis immediately before producing a steel strip, and the other is to improve quality by improving dynamic control that suppresses operational fluctuations during production of each steel strip.

In the support system described in PTL 1, there is a problem in that it is not easy for an operator to judge which of the above quality improvement methods to try in order to improve a relevant operating variable. In addition, in the support system described in PTL 1, the operating condition data used to calculate the correlation with quality is data represented by values on a per-steel-strip basis. Therefore, there is a problem in that it is difficult to effectively extract operating variables for operating conditions that resulted in product quality defects due to variations within a steel strip, compared to variations between steel strips. As a result, the usability of the system for users such as operators attempting to improve product quality is decreased.

The present disclosure is made in view of the above problems, and it would be helpful to provide a quality-factor determination apparatus and a quality-factor determination method that improve the convenience of the apparatus for a user attempting to improve product quality.

### (Solution to Problem)

(1) A quality-factor determination apparatus according to an embodiment of the present disclosure is
   a quality-factor determination apparatus used in a batch production facility having setup calculation and dynamic control functions, comprising:
   a processor, the processor being configured to:
   obtain first classification information that classifies, for each batch, product quality into good quality or poor quality based on an in-batch operational fluctuation range calculated based on operational performance data and a first threshold calculated based on the operational performance data, the operational performance data including actual operating condition data obtained when a product is produced through one or more manufacturing processes and product quality data corresponding to batches of the manufacturing processes;
   obtain second classification information that classifies, for each batch, the product quality into good quality or poor quality based on an in-batch representative operating value calculated based on the operational performance data and a second threshold calculated based on the operational performance data;
   upon obtaining a first determination result indicating that in-batch fluctuation in an actual operating condition is highly likely to be a factor causing a product quality defect, determine the first threshold to be an allowable value of the operational fluctuation range to be suppressed by the dynamic control; and
   upon obtaining a second determination result indicating that inter-batch fluctuation in the actual operating condition is highly likely to be a factor causing the product quality defect, determine the second threshold to be an optimal setting value in the setup calculation.
(2) As an embodiment of the present disclosure, (1), wherein
   the processor obtains the first classification information using a cross-tabulation table based on the first threshold.
(3) As an embodiment of the present disclosure (2), wherein
   the processor obtains the second classification information using a cross-tabulation table based on the second threshold.
(4) As an embodiment of the present disclosure, (3), wherein
   the processor obtains the first determination result based on a first classification accuracy index value calculated by an exact test based on the first classification information being smaller than a second classification accuracy index value calculated by an exact test based on the second classification information.
(5) As an embodiment of the present disclosure, (4), wherein
   the processor obtains the second determination result based on the second classification accuracy index value being less than or equal to the first classification accuracy index value.
(6) As an embodiment of the present disclosure, any one of (1) to (5), wherein
   the processor is further configured to:
   upon obtaining the first determination result, cause the first threshold to be presented as the allowable value of the operational fluctuation range to be suppressed by the dynamic control; and
   upon obtaining the second determination result, cause the second threshold to be presented as the optimal setting value in the setup calculation.
(7) As an embodiment of the present disclosure, any one of (1) to (6), wherein
   the product includes steel products,
   and the product quality includes at least one of surface defects, internal quality, or material properties.
(8) As an embodiment of the present disclosure, any one of (1) to (7), wherein
   the batches are based on at least one of: hot-metal ladle units and torpedo-car units in an ironmaking process, charge units in a steelmaking process, casting-sequence units and slab units in continuous casting, hot-rolled steel-strip units in a hot-rolling process, cold-rolled steel-strip units in a cold-rolling process, or annealed steel-strip units in an annealing process and a surface-treatment process.
(9) As an embodiment of the present disclosure, any one of (1) to (8), wherein
   the quality-factor determination apparatus further comprises a storage unit in which the operational performance data is stored.
(10) A quality-factor determination method according to an embodiment of the present disclosure is
   a quality-factor determination method used in a batch production facility having setup calculation and dynamic control functions, comprising:
   obtaining first classification information that classifies, for each batch, product quality into good quality or poor quality based on an in-batch operational fluctuation range calculated based on operational performance data and a first threshold calculated based on the operational performance data, the operational performance data including actual operating condition data obtained when a product is produced through one or more manufacturing processes and product quality data corresponding to batches of the manufacturing processes;
   obtaining second classification information that classifies, for each batch, product quality into good quality or poor quality based on an in-batch representative operating value calculated based on the operational performance data and a second threshold calculated based on the operational performance data;
   upon obtaining a first determination result indicating that in-batch fluctuation in an actual operating condition is highly likely to be a factor causing a product quality defect, determining the first threshold to be an allowable value of the operational fluctuation range to be suppressed by the dynamic control; and
   upon obtaining a second determination result indicating that inter-batch fluctuation in the actual operating condition is highly likely to be a factor causing the product quality defect, determining the second threshold to be an optimal setting value in the setup calculation.

### (Advantageous Effect)

According to the quality-factor determination apparatus and quality-factor determination method of an embodiment of the present disclosure, the convenience of the apparatus for a user attempting to improve product quality is enhanced.

### BRIEF DESCRIPTION OF THE DRAWINGS

In the accompanying drawings:
FIG. 1 is a block diagram illustrating a schematic configuration of a quality-factor determination apparatus according to an embodiment of the present disclosure;
FIG. 2 is a first figure illustrating an example of operation of the quality-factor determination apparatus in FIG. 1;
FIG. 3 is a second figure illustrating an example of operation of the quality-factor determination apparatus in FIG. 1;
FIG. 4 is a flowchart illustrating an example of processing executed by the quality-factor determination apparatus in FIG. 1;
FIG. 5 is a third figure illustrating an example of operation of the quality-factor determination apparatus in FIG. 1;
FIG. 6 is a fourth figure illustrating an example of operation of the quality-factor determination apparatus in FIG. 1; and
FIG. 7 is a fifth figure illustrating an example of operation of the quality-factor determination apparatus in FIG. 1.

### DETAILED DESCRIPTION

The configuration and operation of the quality-factor determination apparatus 1 according to an embodiment of the present disclosure is described below with reference to the drawings.

The quality-factor determination apparatus 1 is used in a batch production facility that has setup calculation and dynamic control functions. Hereinafter, "batch production" means a production method in which, for example, the setup and equipment settings of a production line are carried out for each defined production unit of a product. "Product" includes, for example, steel products.

Hereinafter, "setup calculation" means, for example, a function of calculating, immediately before the start of production, settings of a production line such that product quality, including final product quality and product characteristic values and the like recognized as having a strong correlation with the final product quality, is controlled as a control target to become a control target value, and of setting the calculated settings in the production line. "Product characteristic values" include, for example, characteristic values such as a temperature of the product obtained during the manufacturing process. "Product quality" includes, for example, at least one of the following: surface defects, internal quality, or material properties. "Internal quality" refers to, for example, the distribution of non-metallic inclusions trapped inside the product during casting and the like, and affects weldability and the occurrence of defects such as cracks. Further, internal quality may include factors such as segregation and hydrogen embrittlement. "Material properties" include, for example, tensile strength and elongation and the like of the product, and affect workability during press forming. Further, material properties may include factors such as yield strength and toughness.

Hereinafter, "dynamic control" means, for example, a function of periodically adjusting the settings of a production line in order to maintain the product quality at a control target value from the start to the completion of production. In a batch production facility that has setup calculation and dynamic control functions, line settings are configured by setup calculation immediately before the start of production for each production unit, and the line settings are changed by dynamic control during production. This is to maintain product quality.

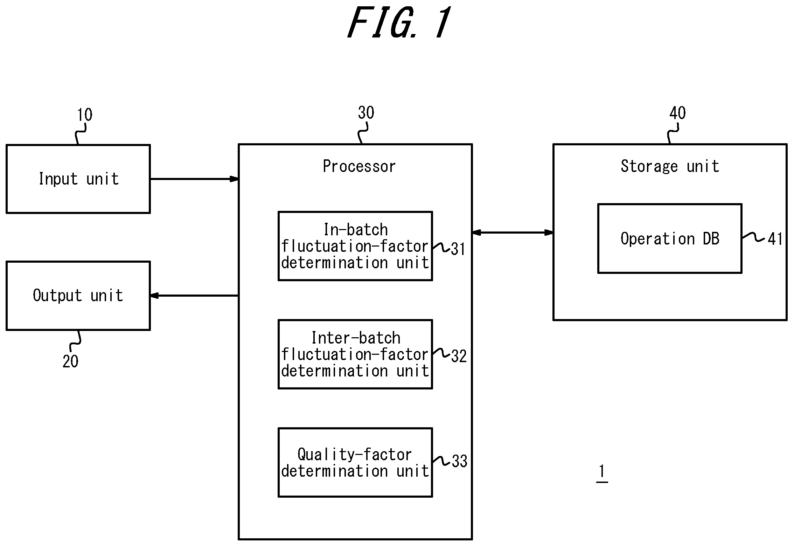

FIG. 1 is a block diagram illustrating a schematic configuration of a quality-factor determination apparatus according to an embodiment of the present disclosure. Referring to FIG. 1, an example of configuration and operation of a quality-factor determination apparatus 1 according to an embodiment is described below. The quality-factor determination apparatus 1 includes an input unit 10, an output unit 20, a processor 30, and a storage unit 40.

The input unit 10 includes one or more input interfaces that detect user input and obtain input information based on user operations. Examples of the input interfaces include physical keys such as a keyboard, capacitive keys, a mouse pointer, a touchscreen integrated with the display of the output unit 20, an imaging module such as a camera, and a microphone for receiving audio input. The input unit 10 is an input means for the processor 30.

The output unit 20 includes one or more output interfaces that output information to a user. Examples of the output interfaces include a display that outputs information visually as an image, a speaker that outputs information aurally as sound, and a vibrator that outputs information tactilely as vibration.

Examples of the storage unit 40 include a memory module such as a hard disk drive (HDD), a solid-state drive (SSD), electrically erasable programmable read-only memory (EEPROM), read-only memory (ROM), and random access memory (RAM). The storage unit 40 may function as a main memory module, an auxiliary memory module, or a cache memory. The storage unit 40 is not limited to one built into the quality-factor determination apparatus 1, and may include a storage medium such as removable media. Examples of the removable media include Universal Serial Bus (USB) memory, a compact disc (CD), a digital versatile disc (DVD), and a Blu-ray^{®} Disc (BD; Blu-Ray is a registered trademark in Japan, other countries, or both).

The storage unit 40 stores information necessary to realize operation of the quality-factor determination apparatus 1. The storage unit 40 stores information obtained from operation of the quality-factor determination apparatus 1. For example, the storage unit 40 can store an operating system (OS), various programs, various tables, various databases, and the like. The storage unit 40 stores an operation database (DB) 41.

The operation DB 41 stores operational performance data for products produced in the past so as to be retrievable on a batch basis. For example, when the product is a steel product produced through multiple manufacturing processes, the "manufacturing processes" include at least one of an ironmaking process, a steelmaking process, a hot-rolling process, a cold-rolling process, an annealing process, or a surface-treatment process. The "batch basis" includes at least one of hot-metal ladle units and torpedo-car units in the ironmaking process, charge units in the steelmaking process, casting-sequence units and slab units in continuous casting, hot-rolled steel-strip units in the hot-rolling process, cold-rolled steel-strip units in the cold-rolling process, or annealed steel-strip units in the annealing process and the surface-treatment process. The batch basis varies depending on the manufacturing process.

Hereinafter, "operational performance data" includes, for example, actual operating condition data from when a product is produced through one or more manufacturing processes, and product quality data corresponding to batches in the manufacturing processes. "Actual operating condition data" includes, for example, production condition data and sensor data and the like from multiple manufacturing processes when products were produced in the past. "Quality data" includes, for example, data on the product quality inspected after the final stage of multiple manufacturing processes.

When the product is a steel product, the actual operating condition data includes, for example, data such as product thickness, product width, product length, chemical composition of steel, and casting speed in the steelmaking process; data such as product thickness, product width, product length, product temperature, and rolling speed in the hot-rolling process; data such as product thickness, product width, product length, and rolling speed in the cold-rolling process; and data such as product thickness, product width, product length, temperature in a surface-treatment furnace, and surface-treatment speed in the surface-treatment process. Quality data includes, for example, the results of surface defect inspections of the product at the end of the surface-treatment process, the results of internal quality tests, the results of material property tests, and the like.

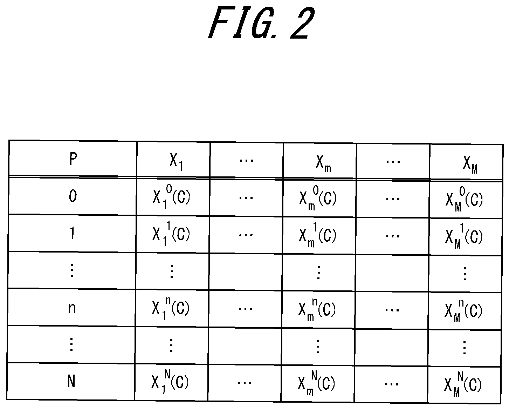

FIG. 2 is a first figure illustrating an example of operation of the quality-factor determination apparatus 1 in FIG. 1. FIG. 2 is a table illustrating an example of the actual operating condition data mentioned above. FIG. 2 illustrates the actual operating condition data for one batch c. In the table illustrated in FIG. 2, the vertical column marked "P" corresponds, for example, to a position of a final product corresponding to quality inspection or a production elapsed time of batch c. The vertical column contains N+1 position numbers within the product or production elapsed times for batch c, ranging from 0 to N. In the table illustrated in FIG. 2, the horizontal rows marked "X₁" to "X_{M}" correspond to, for example, operating conditions for batch c. Each row contains M operating conditions, from X₁ to X_{M}. For example, "Xₘⁿ(c)" indicates the value of the operating condition Xₘ at position n of the product in batch c.

As described above, operating conditions include, for example, product thickness, product width, product length, chemical composition of steel, and casting speed in the steelmaking process; product thickness, product width, product length, product temperature, and rolling speed in the hot-rolling process; product thickness, product width, product length, and rolling speed in the cold-rolling process; and product thickness, product width, product length, temperature in a surface-treatment furnace, and surface-treatment speed in the surface-treatment process.

Referring again to FIG. 1, the processor 30 includes one or more processors. Hereinafter, a "processor" may be, but is not limited to, a general-purpose processor or a dedicated processor specialized for particular processing. The processor 30 includes, for example, a central processing unit (CPU). The processor 30 is communicatively connected to each component constituting the quality-factor determination apparatus 1, and controls the overall operation of the quality-factor determination apparatus 1.

The processor 30 loads a program into a work area of a main memory module of the storage unit 40 and executes the program, controlling each component through the execution of the program. As a result, the processor 30 realizes a function that matches a defined purpose. The processor 30 functions as an in-batch fluctuation-factor determination unit 31, an inter-batch fluctuation-factor determination unit 32, and a quality-factor determination unit 33 through the execution of the program. FIG. 1 illustrates an example where the functions of three functional units are realized by a single computer, but the means of realizing the functions of each functional unit are not limited to this example. For example, the functions of the three functional units may be implemented by multiple computers.

The in-batch fluctuation-factor determination unit 31 of the processor 30 obtains first classification information that classifies, for each batch, product quality into good quality or poor quality based on an in-batch operational fluctuation range calculated based on the operational performance data stored in the storage unit 40 and a first threshold. The following provides a more detailed explanation of the functions of the processor 30 as the in-batch fluctuation-factor determination unit 31.

The in-batch fluctuation-factor determination unit 31 reads the actual operating condition data illustrated in FIG. 2, which is stored as part of the operational performance data in the operation DB 41 of the storage unit 40, for each batch c. The in-batch fluctuation-factor determination unit 31 calculates the operational fluctuation range within batch c for each operating condition Xₘ based on the actual operating condition data read. Hereinafter, "operational fluctuation range" includes, for example, the difference between the maximum value and the minimum value in the data for operating condition Xₘ, the standard deviation, other statistical values related to fluctuation, and the like.

The in-batch fluctuation-factor determination unit 31 reads the operational performance data stored in the operation DB 41 of the storage unit 40 and classifies product quality into a product group having minor or no damage, such as surface defects, and a product group having severe defects, such as surface defects, and calculates a first threshold for the operational fluctuation range to obtain first classification information using machine learning.

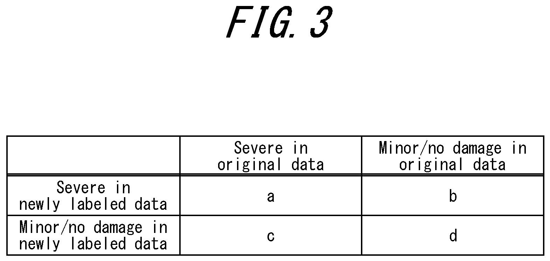

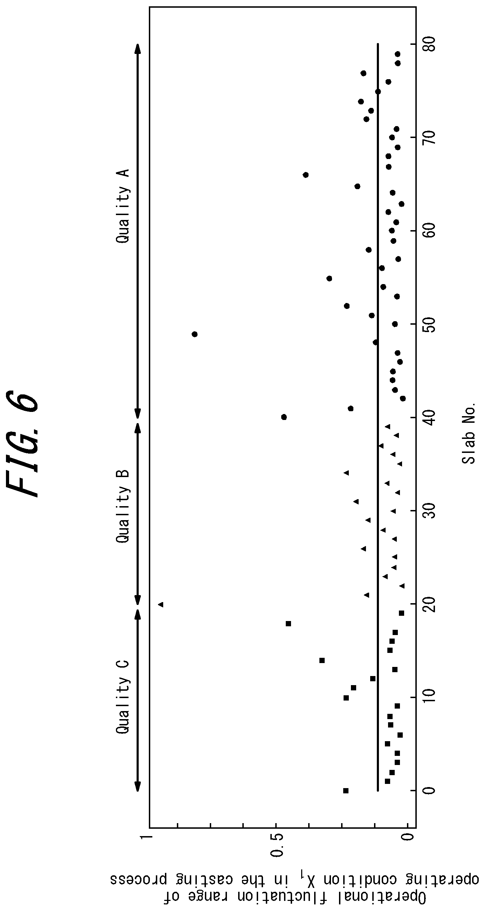

FIG. 3 is a second figure illustrating an example of operation of the quality-factor determination apparatus 1 in FIG. 1. The in-batch fluctuation-factor determination unit 31 obtains the first classification information using a cross-tabulation table based on the first threshold. Hereinafter, "first classification information" may include, for example, a cross-tabulation table based on the first threshold, and a scatter plot as illustrated in FIG. 6 and described later. For example, the in-batch fluctuation-factor determination unit 31 classifies the data of the operational fluctuation range for each batch c as a cross-tabulation table using two variables: the severity level newly labeled based on the first threshold and an original severity level based on the quality data included in the operational performance data, and obtains the first classification information. In FIG. 3, a, b, c, and d each represent the number of data points that meet the corresponding condition.

The in-batch fluctuation-factor determination unit 31 calculates a first classification accuracy index value, which indicates how accurately the first threshold can classify the product quality as good (minor/no damage) and the product quality as poor (severe) in the first classification information, as a p-value obtained by Fisher's exact test on the cross-tabulation table. The p-value p₁, which represents the first classification accuracy index, is calculated using the following Expression 1, where i = a₁ + b₁ + c₁ + d₁.
[Math. 1] ${p}_{1} = \frac{\left({a}_{1}+{b}_{1}\right) ! \left({c}_{1}+{d}_{1}\right) ! \left({a}_{1}+{c}_{1}\right) ! \left({b}_{1}+{d}_{1}\right) !}{i ! {a}_{1} ! {b}_{1} ! {c}_{1} ! {d}_{1} !}$ (Expression 1)

Here, a₁, b₁, c₁, and d₁ correspond to a, b, c, and d in FIG. 3, respectively, and indicate the number of data points for the operational fluctuation range that meet the corresponding conditions. The p-value takes a value greater than or equal to 0. The closer to zero and smaller the first classification accuracy index p₁, the higher the accuracy of the product quality classification using the first threshold.

The inter-batch fluctuation-factor determination unit 32 of the processor 30 obtains second classification information that classifies, for each batch, product quality into good quality or poor quality based on an in-batch representative operating value calculated based on the operational performance data stored in the storage unit 40 and a second threshold. The following provides a more detailed explanation of the functions of the processor 30 as the inter-batch fluctuation-factor determination unit 32.

The inter-batch fluctuation-factor determination unit 32 reads the actual operating condition data illustrated in FIG. 2, which is stored as part of the operational performance data in the operation DB 41 of the storage unit 40, for each batch c. The inter-batch fluctuation-factor determination unit 32 calculates the representative operating value within batch c for each operating condition Xₘ based on the actual operating condition data read. Hereinafter, "representative operating value" includes, for example, the median value, the mean value, and other representative statistical values in the data for the operating condition Xₘ.

The inter-batch fluctuation-factor determination unit 32 reads the operational performance data stored in the operation DB 41 of the storage unit 40 and classifies product quality into a product group having minor or no damage, such as surface defects, and a product group having severe defects, such as surface defects, and calculates a second threshold for the representative operating value to obtain second classification information using machine learning.

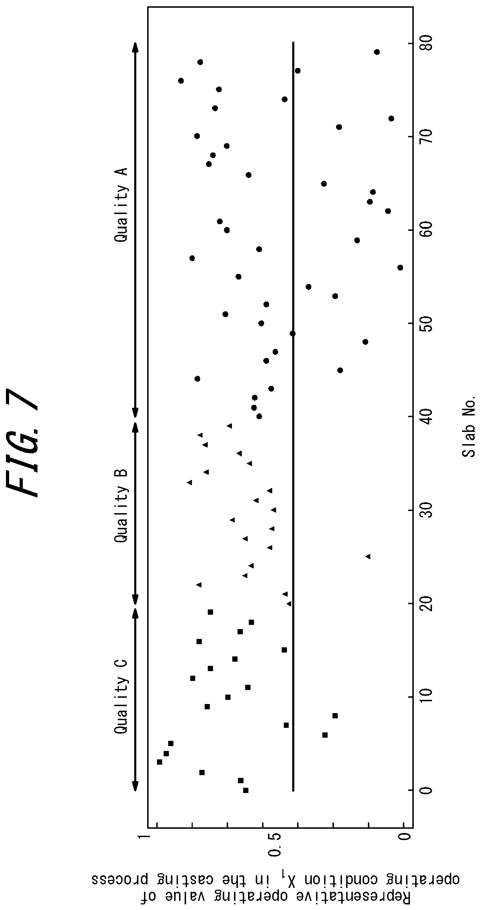

The inter-batch fluctuation-factor determination unit 32 obtains second classification information using a cross-tabulation table based on the second threshold, similar to the processing carried out by the in-batch fluctuation-factor determination unit 31 as explained with reference to FIG. 3. Hereinafter, "second classification information" may include, for example, a cross-tabulation table based on the second threshold, or a scatter plot as illustrated in FIG. 7 and described later. For example, the inter-batch fluctuation-factor determination unit 32 classifies the data of the representative operating value for each batch c as a cross-tabulation table using two variables: the severity level newly labeled based on the second threshold and the original severity level based on the quality data included in the operational performance data, and obtains the second classification information.

The inter-batch fluctuation-factor determination unit 32 calculates a second classification accuracy index value, which indicates how accurately the second threshold can classify the product quality as good (minor/no damage) and product quality as poor (severe) in the second classification information, as a p-value obtained by Fisher's exact test on the cross-tabulation table. The p-value p₂, which represents the second classification accuracy index, is calculated using the following Expression 2, where i = a₂ + b₂ + c₂ + d₂.
[Math. 2] ${p}_{2} = \frac{\left({a}_{2}+{b}_{2}\right) ! \left({c}_{2}+{d}_{2}\right) ! \left({a}_{2}+{c}_{2}\right) ! \left({b}_{2}+{d}_{2}\right) !}{i ! {a}_{2} ! {b}_{2} ! {c}_{2} ! {d}_{2} !}$ (Expression 2)

Here, a₂, b₂, c₂, and d₂ correspond to a, b, c, and d in FIG. 3, respectively, and indicate the number of data points for the representative operating value that meet the corresponding conditions. The p-value takes a value greater than or equal to 0. The closer to zero and smaller the second classification accuracy index p₂, the higher the accuracy of the product quality classification using the second threshold.

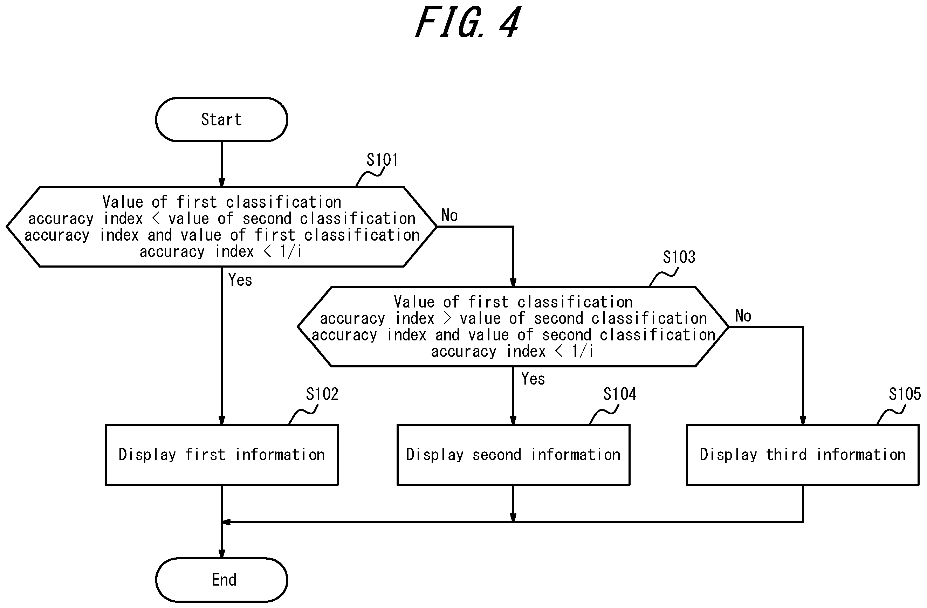

FIG. 4 is a flowchart illustrating an example of processing executed by the quality-factor determination apparatus 1 in FIG. 1. The flowchart in FIG. 4 illustrates the overall process of determining a factor causing a product quality defect and providing information to a user using the quality-factor determination apparatus 1.

In step S101, the quality-factor determination unit 33 of the quality-factor determination apparatus 1 determines whether or not in-batch fluctuation in an actual operating condition is likely to be a cause of product quality defects. For example, the quality-factor determination unit 33 determines whether the first classification accuracy index value p₁, calculated by Fisher's exact test based on the first classification information obtained by the in-batch fluctuation-factor determination unit 31, is smaller than the second classification accuracy index value p₂, calculated by Fisher's exact test based on the second classification information obtained by the inter-batch fluctuation-factor determination unit 32. In addition, the quality-factor determination unit 33 determines whether the first classification accuracy index value p₁ is less than 1/i (the value obtained by dividing 1 by the number of data points i). The value used for the determination is not limited to 1/i, but may be any other value. The smaller the value used for the determination, the stricter the criteria for determining whether in-batch fluctuation is likely to be a factor causing product quality defects.

Upon obtaining a first determination result indicating that in-batch fluctuation in the actual operating condition is highly likely to be a factor causing product quality defects, the quality-factor determination unit 33 executes the process in step S102. Upon obtaining a first determination result based on the first classification accuracy index value p₁ being smaller than the second classification accuracy index value p₂, the quality-factor determination unit 33 executes the process in step S102. For example, upon determining that the first classification accuracy index value p₁ is smaller than the second classification accuracy index value p₂, and that the first classification accuracy index value p₁ is smaller than 1/i, the quality-factor determination unit 33 executes the process in step S102.

Upon obtaining a determination result other than the first determination result, the quality-factor determination unit 33 executes the process in step S103. For example, upon determining that the first classification accuracy index value p₁ is greater than or equal to the second classification accuracy index value p₂, and/or that the first classification accuracy index value p₁ is greater than or equal to 1/i, the quality-factor determination unit 33 executes the process in step S103.

In step S102, upon obtaining the first determination result in step S101, the processor 30 of the quality-factor determination apparatus 1 outputs the first information using the output unit 20. For example, the processor 30 displays the first information using the display of the output unit 20. Hereinafter, "first information" includes, for example, first visual information. "First visual information" includes, for example, the name of the operating condition that was the subject of the determination, a message indicating that the in-batch fluctuation of the operating condition is highly likely to be a factor causing poor product quality, the value of the first threshold calculated by the in-batch fluctuation-factor determination unit 31, a message indicating that the first threshold corresponds to the allowable value of the operational fluctuation range that should be suppressed by dynamic control in order to maintain good product quality, and the like.

As described above, in step S101, upon obtaining a first determination result indicating that in-batch fluctuation in the actual operating condition is highly likely to be a factor causing poor product quality, in step S102, the processor 30 causes the first threshold to be presented as the allowable value of the operational fluctuation range that should be suppressed by dynamic control.

In step S103, when the processor 30 of the quality-factor determination apparatus 1 obtains a determination result other than the first determination result in step S101, the processor 30 determines whether or not there is a high probability that inter-batch fluctuation in the actual operating condition is a factor causing product quality defects. For example, the quality-factor determination unit 33 determines whether the second classification accuracy index value p₂, calculated by Fisher's exact test based on the second classification information obtained by the inter-batch fluctuation-factor determination unit 32, is less than or equal to the first classification accuracy index value p₁, calculated by Fisher's exact test based on the first classification information obtained by the in-batch fluctuation-factor determination unit 31. In addition, the quality-factor determination unit 33 determines whether the second classification accuracy index value p₂ is less than 1/i. The value used for the determination is not limited to 1/i, but may be any other value. The smaller the value used for the determination, the stricter the criteria for determining whether in-batch fluctuation is likely to be a factor causing product quality defects.

Upon obtaining a second determination result indicating that inter-batch fluctuation in the actual operating condition is highly likely to be a factor causing product quality defects, the quality-factor determination unit 33 executes the process in step S104. Upon obtaining a second determination result based on the second classification accuracy index value p₂ being less than or equal to the first classification accuracy index value p₁, the quality-factor determination unit 33 executes the process in step S104. For example, upon determining that the second classification accuracy index value p₂ is less than or equal to the first classification accuracy index value p₁, and that the second classification accuracy index value p₂ is less than 1/i, the quality-factor determination unit 33 executes the process in step S104.

Upon obtaining a determination result other than the second determination result, the quality-factor determination unit 33 executes the process in step S105. For example, upon determining that the second classification accuracy index value p₂ is greater than or equal to the first classification accuracy index value p₁, and/or that the second classification accuracy index value p₂ is 1/i or greater, the quality-factor determination unit 33 executes the process in step S105. For example, upon determining that both the first classification accuracy index value p₁ and the second classification accuracy index value p₂ are 1/i or greater, the quality-factor determination unit 33 executes the process in step S105.

In step S104, upon obtaining the second determination result in step S103, the processor 30 of the quality-factor determination apparatus 1 outputs the second information using the output unit 20. For example, the processor 30 displays the second information using the display of the output unit 20. Hereinafter, "second information" includes, for example, second visual information. "Second visual information" includes, for example, the name of the operating condition that was the subject of the determination, a message indicating that the inter-batch fluctuation of the operating condition is highly likely to be a factor causing poor product quality, the value of the second threshold calculated by the inter-batch fluctuation-factor determination unit 32, a message indicating that the second threshold corresponds to the optimal setting value in the setup calculation for maintaining good product quality, and the like.

As described above, when the processor 30 obtains a second determination result in step S103 indicating that inter-batch fluctuation in the actual operating condition is likely to be a factor causing product quality defects, then in step S104 the processor 30 causes the second threshold to be presented as the optimal setting value in the setup calculation.

In step S105, upon obtaining a determination result other than the second determination result in step S103, the processor 30 of the quality-factor determination apparatus 1 outputs third information using the output unit 20. For example, the processor 30 displays the third information using the display of the output unit 20. Hereinafter, "third information" includes, for example, third visual information. "Third visual information" includes, for example, a message indicating that the operating condition subject to the determination is likely to have little impact on product quality. The third information includes information indicating that both in-batch fluctuation and inter-batch fluctuation in the actual operating condition are likely to have little impact on product quality.

In summary, the quality-factor determination unit 33 of the quality-factor determination apparatus 1 compares the first classification accuracy index value p₁ calculated by the in-batch fluctuation-factor determination unit 31 using the first threshold with the second classification accuracy index value p₂ calculated by the inter-batch fluctuation-factor determination unit 32 using the second threshold. When the first classification accuracy index value p₁ is smaller than the second classification accuracy index value p₂, and the first classification accuracy index value p₁ is smaller than 1/i, the processor 30 outputs as first information, via the output unit 20, that in-batch fluctuation of the actual operating condition has a greater impact than inter-batch fluctuation. The first information also includes setting the first threshold calculated by the in-batch fluctuation-factor determination unit 31 as the allowable value of the operational fluctuation range that should be suppressed by dynamic control.

When the second classification accuracy index value p₂ is less than or equal to the first classification accuracy index value p₁, and the second classification accuracy index value p₂ is smaller than 1/i, the processor 30 outputs as second information, via the output unit 20, that inter-batch fluctuation of the actual operating condition has a greater impact than in-batch fluctuation. The second piece of information also includes setting the second threshold calculated by the inter-batch fluctuation-factor determination unit 32 as the optimal setting value in the setup calculation for maintaining good product quality.

### EXAMPLES

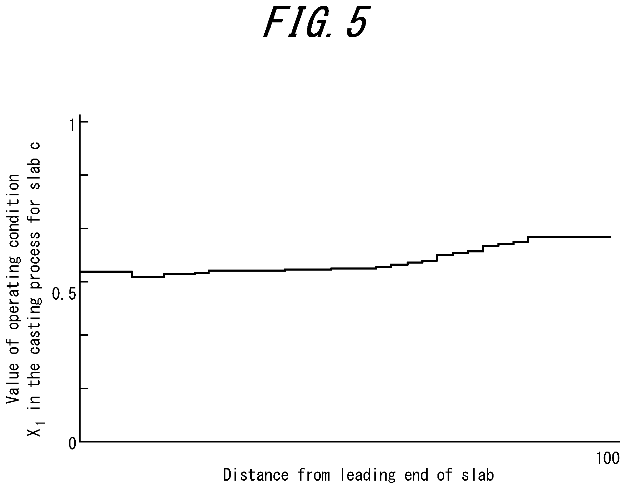

An example of the present disclosure is described below with reference to FIG. 5 to FIG. 7. An example is described in which the quality-factor determination apparatus 1 according to an embodiment of the present disclosure is applied to the production of a thin steel-sheet product.

FIG. 5 is a third figure illustrating an example of operation of the quality-factor determination apparatus 1 in FIG. 1. For example, the operation DB 41 of the storage unit 40 stores a set of values for the operating condition X₁ in a casting process, as an example of the actual operating condition Xₘ in FIG. 2. FIG. 5 illustrates the operating condition X₁ for slab c, which represents one batch of data from the operating condition X₁ stored in the operation DB 41, as a chart. The horizontal axis in FIG. 5 corresponds to the vertical column in FIG. 2.

The in-batch fluctuation-factor determination unit 31 reads the data of the casting process operating condition X₁ stored in the operation DB 41 and calculates the operational fluctuation range for each slab. For example, for the data of slab c corresponding to FIG. 5, the in-batch fluctuation-factor determination unit 31 calculates the difference of 0.15 (= 0.66 - 0.51) between the maximum value of operating condition X₁, 0.66 (at a distance of 100 from the slab leading end), and the minimum value of operating condition X₁, 0.51 (at a distance of 10 from the slab leading end). In this example, the operating condition X₁ may be, for example, a mold thermocouple temperature measured by a thermocouple embedded in the outer surface of the mold during the casting process. In FIG. 5, the values of the operating condition X₁ are normalized to range from 0 to 1.

FIG. 6 is a fourth figure illustrating an example of operation of the quality-factor determination apparatus 1 in FIG. 1. The in-batch fluctuation-factor determination unit 31 carries out similar calculations on other slab data to obtain data on the operational fluctuation range for slab units, as illustrated in FIG. 6. FIG. 6 illustrates data for 80 slabs. As actual operating condition data for batch c, there are a total of 80 table data entries for the table in FIG. 2.

In FIG. 6, the vertical axis is normalized so that the values of the operational fluctuation range are in a range from 0 to 1. Each slab is labeled A, B, or C, indicating product quality level. The order A > B > C indicates the product quality, from best to worst. In FIG. 6, slabs No. 0 to 19 are labeled C, slabs No. 20 to 39 are labeled B, and slabs No. 40 to 79 are labeled A.

According to the present disclosure, the in-batch fluctuation-factor determination unit 31 needs to calculate the first threshold for classifying the operational fluctuation range data into two categories: "Quality A" and "Quality B or C". "Quality A" corresponds to "minor/no damage" in the cross-tabulation table in FIG. 3. "Quality B or C" corresponds to "severe" in the cross-tabulation table in FIG. 3. The first threshold calculated by machine learning is indicated by a solid line in the scatter plot in FIG. 6. The in-batch fluctuation-factor determination unit 31 classifies coils whose operational fluctuation range value is above the first threshold of the solid line as good quality and coils whose value is below as poor quality, and obtains first classification information.

The in-batch fluctuation-factor determination unit 31 calculates 0.63 as the first classification accuracy index value p₁ by Fisher's exact test, based on the first classification information illustrated in FIG. 6. The smaller the p-value, the higher the classification accuracy of product quality based on the first threshold.

Product quality is determined, for example, based on surface defects inspected by a surface-defect inspection system installed at delivery from the final annealing process. The surface-defect inspection system detects only defective portions from an image of the coil surface captured by a line sensor camera and extracts optical features such as length, width, and brightness of defects. This surface-defect inspection system determines whether a product is of good or poor quality based on the extracted optical features.

For example, when thin steel sheets are used as automobile bodies, surface defects can result in uneven paint application, leading to the product being deemed unsuitable in terms of quality. In such cases, measures are taken to discard only the defective portions before using the rest of the sheet. Each label representing the quality rank of the above products is determined by a comprehensive assessment based on factors such as the number of surface defects within the same coil, the degree of defect accumulation, and the severity of the defects, including depth.

The inter-batch fluctuation-factor determination unit 32 reads the data of the casting process operating condition X₁ stored in the operation DB 41 and calculates the representative operating value for each slab. For example, for the data of slab c corresponding to FIG. 5, the inter-batch fluctuation-factor determination unit 32 calculates the median value of operating condition X₁, which is 0.56 (at a distance of 50 from the slab leading end).

FIG. 7 is a fifth figure illustrating an example of operation of the quality-factor determination apparatus 1 in FIG. 1. The inter-batch fluctuation-factor determination unit 32 carries out similar calculations on other slab data to obtain data on the representative operating value for slab units, as illustrated in FIG. 7. FIG. 7 illustrates data for 80 slabs. As actual operating condition data for batch c, there are a total of 80 table data entries for the table in FIG. 2.

In FIG. 7, the vertical axis is normalized so that the values of the representative operating value are in a range from 0 to 1. Each slab is labeled A, B, or C, indicating product quality level. The order A > B > C indicates the product quality, from best to worst. In FIG. 7, slabs No. 0 to 19 are labeled C, slabs No. 20 to 39 are labeled B, and slabs No. 40 to 79 are labeled A.

According to the present disclosure, the inter-batch fluctuation-factor determination unit 32 needs to calculate the second threshold for classifying the operational representative value data into two categories: "Quality A" and "Quality B or C". "Quality A" corresponds to "minor/no damage" in the cross-tabulation table in FIG. 3. "Quality B or C" corresponds to "severe" in the cross-tabulation table in FIG. 3. The second threshold calculated by machine learning is indicated by a solid line in the scatter plot in FIG. 7. The inter-batch fluctuation-factor determination unit 32 classifies coils whose representative operating value is below the second threshold of the solid line as good quality and coils whose value is above as poor quality, and obtains second classification information.

The inter-batch fluctuation-factor determination unit 32 calculates 0.0052 as the second classification accuracy index value p₂ by Fisher's exact test, based on the second classification information illustrated in FIG. 7. The smaller the p-value, the higher the classification accuracy of product quality based on the second threshold.

The quality-factor determination unit 33 compares the first classification accuracy index value p₁ of 0.63, obtained using the first threshold calculated by the in-batch fluctuation-factor determination unit 31, with the second classification accuracy index value p₂ of 0.0052, obtained using the second threshold calculated by the inter-batch fluctuation-factor determination unit 32. The processor 30 determines that the second classification accuracy index value p₂ based on the second threshold is smaller, and the quality-factor determination unit 33 determines that the second classification accuracy index value p₂ of 0.0052 is smaller than 1/80 (= 0.0125), and therefore executes the process in step S104 in the flowchart of FIG. 4. The processor 30, regarding the operating condition X₁ in the casting process, presents as second information via the output unit 20 that inter-batch fluctuations of the actual operating condition significantly affect product quality, while in-batch fluctuations have little effect. The second information also includes the second threshold of 0.4 calculated by the inter-batch fluctuation-factor determination unit 32, which is an optimal setting value in the setup calculation for maintaining good product quality.

According to the quality-factor determination apparatus 1 of the above embodiment, the convenience of the apparatus for a user attempting to improve product quality is enhanced.

The processor 30 of the quality-factor determination apparatus 1 obtains first classification information that classifies, for each batch, product quality into good quality or poor quality based on the in-batch operational fluctuation range calculated based on the operational performance data stored in the storage unit 40 and the first threshold. When the processor 30 obtains the first determination result indicating that in-batch fluctuation in the actual operating condition is highly likely to be a factor causing a product quality defect, the processor 30 causes the first threshold to be presented as the allowable value of the operational fluctuation range that should be suppressed by dynamic control.

For example, the processor 30 of the quality-factor determination apparatus 1 calculates the in-batch operational fluctuation range from time-series data of the in-batch operating condition, and determines whether the relationship between the calculated operational fluctuation range and the product quality is statistically significant. This allows the processor 30 to also present an allowable value of the operational fluctuation range that should be suppressed by dynamic control.

The processor 30 of the quality-factor determination apparatus 1 obtains second classification information that classifies, for each batch, product quality into good quality or poor quality based on the in-batch representative operating value calculated based on the operational performance data stored in the storage unit 40 and the second threshold. When the processor 30 obtains the second determination result indicating that inter-batch fluctuation in the actual operating condition is highly likely to be a factor causing the product quality defect, the processor 30 causes the second threshold to be presented as an optimal setting value in the setup calculation.

For example, the processor 30 of the quality-factor determination apparatus 1 calculates the in-batch representative operating value from time-series data of the in-batch operating condition, and determines whether the relationship between the calculated representative operating values and the product quality is statistically significant. This allows the processor 30 to present an optimal setting value in the setup calculation that minimizes product quality defects.

Based on the above, a user can easily determine whether they should improve product quality by improving setup calculations or improve product quality by improving dynamic control to address current product quality issues. As a result, the convenience of the quality-factor determination apparatus 1 for a user attempting to improve product quality is enhanced.

Although the present disclosure has been described based on the drawings and examples, it should be noted that a person skilled in the art may make variations and modifications based on the present disclosure. Therefore, it should be noted that such variations and modifications are included within the scope of the present disclosure. For example, functions and the like included in each component and step may be rearranged, and multiple components and steps may be combined into one or divided, as long as no logical inconsistency results.

For example, the shape, size, pattern, arrangement, orientation, type, and number of each of the components described above are not limited to those illustrated in the above description and drawings. The shape, size, pattern, arrangement, orientation, type, and number of each of the components may be configured arbitrarily, as long as the function thereof is achievable. Each component of the illustrated quality-factor determination apparatus 1 is a functional concept. The specific form of each component is not limited to that illustrated in the drawings.

For example, it is also possible to configure a general-purpose electronic device such as a smartphone or computer to function as the quality-factor determination apparatus 1 according to the above embodiment. Specifically, a program describing processing content that realizes each function of the quality-factor determination apparatus 1 according to an embodiment is stored in the memory of the electronic device, and the processor of the electronic device reads and executes the program. Accordingly, the present disclosure may also be realized as a program executable by a processor.

Alternatively, the present disclosure can be realized as a non-transitory computer-readable medium storing a program executable by one or more processors for causing the quality-factor determination apparatus 1 according to an embodiment or the like to execute each function. The scope of the present disclosure should be understood to include these examples.

According to an above embodiment, the processor 30 of the quality-factor determination apparatus 1 is described as calculating the p-value based on Fisher's exact test, but is not limited to this. The processor 30 may calculate a value equivalent to the p-value based on other exact tests, or may calculate a classification accuracy index value based on a method other than an exact test.

According to an above embodiment, when the processor 30 of the quality-factor determination apparatus 1 obtains the first determination result indicating that in-batch fluctuation in an actual operating condition is highly likely to be a factor causing product quality defects, the processor 30 causes the first threshold to be presented as the allowable value of the operational fluctuation range to be suppressed by dynamic control, but is not limited to this. The processor 30 of the quality-factor determination apparatus 1 may, instead of or in addition to such presentation processing, actually cause a control device or the like to execute dynamic control based on the first threshold, which serves as the allowable value of the operational fluctuation range to be suppressed by dynamic control. As a preliminary step to the presentation process and/or execution process described above, the processor 30 determines the first threshold as the allowable value of the operational fluctuation range to be suppressed by dynamic control.

According to an above embodiment, when the processor 30 of the quality-factor determination apparatus 1 obtains the second determination result indicating that inter-batch fluctuation in an actual operating condition is highly likely to be a cause of product quality defects, the processor 30 causes the second threshold to be presented as an optimal setting value in the setup calculation, but is not limited to this. The processor 30 of the quality-factor determination apparatus 1 may, instead of or in addition to such presentation processing, actually cause a control device or the like to execute the setup calculation based on the second threshold, which serves as an optimal setting value in the setup calculation. As a preliminary step to the presentation process and/or execution process described above, the processor 30 determines the second threshold as an optimal setting value in the setup calculation.

According to the above embodiment, the quality-factor determination apparatus 1 integrally has the storage unit 40 in which operational performance data is stored together with the processor 30, but is not limited to this. The quality-factor determination apparatus 1 does not necessarily comprise the storage unit 40. The storage unit 40 may be included in a device separate from the quality-factor determination apparatus 1. The same applies to the input unit 10 and the output unit 20, the quality-factor determination apparatus 1 only needs to comprise at least the processor 30.

### REFERENCE SIGNS LIST

- 1: quality-factor determination apparatus
- 10: input unit
- 20: output unit
- 30: processor
- 31: in-batch fluctuation-factor determination unit
- 32: inter-batch fluctuation-factor determination unit
- 33: quality-factor determination unit
- 40: storage unit
- 41: operation DB

## Claims

1. A quality-factor determination apparatus used in a batch production facility having setup calculation and dynamic control functions, comprising:
a processor, the processor being configured to:
obtain first classification information that classifies, for each batch, product quality into good quality or poor quality based on an in-batch operational fluctuation range calculated based on operational performance data and a first threshold calculated based on the operational performance data, the operational performance data including actual operating condition data obtained when a product is produced through one or more manufacturing processes and product quality data corresponding to batches of the manufacturing processes;
obtain second classification information that classifies, for each batch, the product quality into good quality or poor quality based on an in-batch representative operating value calculated based on the operational performance data and a second threshold calculated based on the operational performance data;
upon obtaining a first determination result indicating that in-batch fluctuation in an actual operating condition is highly likely to be a factor causing a product quality defect, determine the first threshold to be an allowable value of the operational fluctuation range to be suppressed by the dynamic control; and
upon obtaining a second determination result indicating that inter-batch fluctuation in the actual operating condition is highly likely to be a factor causing the product quality defect, determine the second threshold to be an optimal setting value in the setup calculation.

2. The quality-factor determination apparatus according to claim 1, wherein
the processor obtains the first classification information using a cross-tabulation table based on the first threshold.

3. The quality-factor determination apparatus according to claim 2, wherein
the processor obtains the second classification information using a cross-tabulation table based on the second threshold.

4. The quality-factor determination apparatus according to claim 3, wherein
the processor obtains the first determination result based on a first classification accuracy index value calculated by an exact test based on the first classification information being smaller than a second classification accuracy index value calculated by an exact test based on the second classification information.

5. The quality-factor determination apparatus according to claim 4, wherein
the processor obtains the second determination result based on the second classification accuracy index value being less than or equal to the first classification accuracy index value.

6. The quality-factor determination apparatus according to any one of claims 1 to 5, wherein
the processor is further configured to:
upon obtaining the first determination result, cause the first threshold to be presented as the allowable value of the operational fluctuation range to be suppressed by the dynamic control; and
upon obtaining the second determination result, cause the second threshold to be presented as the optimal setting value in the setup calculation.

7. The quality-factor determination apparatus according to any one of claims 1 to 6, wherein
the product includes steel products,
and the product quality includes at least one of surface defects, internal quality, or material properties.

8. The quality-factor determination apparatus according to any one of claims 1 to 7, wherein
the batches are based on at least one of: hot-metal ladle units and torpedo-car units in an ironmaking process, charge units in a steelmaking process, casting-sequence units and slab units in continuous casting, hot-rolled steel-strip units in a hot-rolling process, cold-rolled steel-strip units in a cold-rolling process, or annealed steel-strip units in an annealing process and a surface-treatment process.

9. The quality-factor determination apparatus according to any one of claims 1 to 8, further comprising
a storage unit in which the operational performance data is stored.

10. A quality-factor determination method used in a batch production facility having setup calculation and dynamic control functions, comprising:
obtaining first classification information that classifies, for each batch, product quality into good quality or poor quality based on an in-batch operational fluctuation range calculated based on operational performance data and a first threshold calculated based on the operational performance data, the operational performance data including actual operating condition data obtained when a product is produced through one or more manufacturing processes and product quality data corresponding to batches of the manufacturing processes;
obtaining second classification information that classifies, for each batch, product quality into good quality or poor quality based on an in-batch representative operating value calculated based on the operational performance data and a second threshold calculated based on the operational performance data;
upon obtaining a first determination result indicating that in-batch fluctuation in an actual operating condition is highly likely to be a factor causing a product quality defect, determining the first threshold to be an allowable value of the operational fluctuation range to be suppressed by the dynamic control; and
upon obtaining a second determination result indicating that inter-batch fluctuation in the actual operating condition is highly likely to be a factor causing the product quality defect, determining the second threshold to be an optimal setting value in the setup calculation.
